# EUROPÄISCHE PATENTSCHRIFT

(11) **EP 0 620 778 B1**
(45) Veröffentlichungstag und Bekanntmachung des Hinweises auf die Patenterteilung: **09.04.1997**
(21) Anmeldenummer: 93917510.5
(22) Anmeldetag: 17.08.1993
(51) Int. Cl.: B29C 47/10, B01F 7/16

(54) **VORRICHTUNG ZUR HERSTELLUNG EINES VERNETZTEN EXTRUDIERTEN PRODUKTES**
DEVICE FOR EXTRUDING PRODUCTS FROM CROSS-LINKED POLYMERS
DISPOSITIF DE FABRICATION D'UN PRODUIT EXTRUDE RETICULE

(30) Priorität: 20.08.1992 DE 4227542
(43) Veröffentlichungstag der Anmeldung: 26.10.1994
(73) Patentinhaber: Bernhard Rustige GmbH und Co. Kommanditgesellschaft, D-28195 Bremen (DE)
(72) Erfinder: KEMPTER, Werner, CH-9430 St Margrethen (CH)
(74) Vertreter: Riebling, Peter, Dr.-Ing., Patentanwalt
(86) Internationale Anmeldenummer: CH9300204
(87) Internationale Veröffentlichungsnummer: WO9404339

(56) Entgegenhaltungen:
- EP-A- 0 309 410
- CH-A- 679 564
- DE-A- 3 125 396
- FR-A- 1 506 697
- FR-A- 1 550 464
- FR-A- 2 281 786
- GB-A- 710 162
- US-A- 3 985 345

## Beschreibung

Gegenstand der vorliegenden Erfindung ist eine Vorrichtung zur Herstellung eines vernetzten extrudierten Produktes nach dem Oberbegriff des Patentanspruches 1.

Eine derartige Vorrichtung ist beispielsweise aus der US-A-3985345 oder der CH-A-679564 bekannt.

Für das vollständige und gleichmäßige Quervernetzen der Polymere ist es von ausschlaggebender Bedeutung, daß ein ausreichendes Mischen sämtlicher Verbindungsbestandteile erzielt werden kann. Dies wird jedoch in der bereits bekannten Vorrichtung nur zum Teil erzielt.

Es ist daher Aufgabe der vorliegenden Erfindung, eine Vorrichtung zu schaffen, mit der eine bessere Durchmischung der Reaktionsgemischbestandteile erreicht werden kann, und die kostengünstiger herzustellen ist.

Die Lösung der gestellten Aufgabe erfolgt nach der Erfindung durch die technische Lehre des Anspruches 1.

Ein bekanntes Merkmal der erfindungsgemäßen Vorrichtung ist, daß zwischen der Zuführeinrichtung für Kunststoffgranulat (Polymere) und der Stranggießvorrichtung eine zusätzliche Mischeinrichtung zum Vormischen sämtlicher Reaktionsgemischbestandteile vorgesehen ist. Dabei ist es besonders vorteilhaft, daß sämtliche Reaktionsgemischbestandteile in einem eigens dafür vorgesehenen Behälter, dem Mischer, zusammengeführt werden und vollständig miteinander vermischt werden, bis das Reaktionsgemisch schließlich optimal durchmischt dem Extruder zugeführt werden kann.

Diese optimale Durchmischung der Reaktionsgemischbestandteile wirkt sich ebenfalls günstig auf den Wirkungsgrad der Gesamt-Extrudervorrichtung aus, wodurch die bislang für das Herstellungsverfahren notwendige Extruderschnecke mit dem Längendurchmesser-Verhältnis von 30 x D erfindungsgemäß durch einen Extruder mit einem Verhältnis von 26 x D ersetzt werden kann. Durch diesen leichterbauenden Extruder verringern sich die Herstellungskosten der Gesamt-Vorrichtung.

In der erfindungsgemäßen Mischeinrichtung erfolgt die Durchmischung in Vertikalrichtung. Hierzu umfaßt die Mischeinrichtung vorzugsweise einen in Vertikalrichtung oben angeordneten zentrischen Zulauf für das Kunststoffgranulat und mindestens eine Zuführeinrichtung für ein Additiv, die seitlich an der Mischeinrichtung ausgebildet sein kann und über die das Additivin horizontaler Richtung in den von oben in vertikaler Richtung einströmenden Granulatfluß eingespritzt wird. Das Einspritzen eines oder mehrerer Zusatzstoffe senkrecht zum Polymerstrom bewirkt insbesondere wenn diese Zuführeinrichtungen im oberen Bereich des Mischers angeordnet sind eine erste strömungsmäßige Durchmischung der Reaktionsgemisch-Bestandteile, die dann, nachdem sie den Mischerinnenraum von unten her aufgefüllt haben, mit Hilfe eines Rührgestänges ein zweites Mal mechanisch durchmischt werden.

Die erste Vermischungsphase wird ferner noch dadurch optimiert, indem das Rührgestänge koaxial und über radial zu dem Massenstrom des einströmenden Kunststoff-Granulates vom Gestänge weg verlaufende Streben angeordnet ist. Bei einer solchen Rührgestängeanordnung prallen nämlich Granulatteilchen gegen die Befestigungsstreben und das Rührgestänge und gelangen dadurch stärker verwirbelt in den Mischerinnenraum, wodurch die horizontal eingespritzten Additive die verwirbelten Granulatteilchen besser benetzen können. Gleichzeitig wird hierdurch die erforderliche mechanische Rührdauer des Reaktionsgemisches verringert.

Aus der vertikalen Bauweise der Mischeinrichtung ergibt sich der weitere Vorteil, gleichzeitig mehrere Zuführeinrichtungen für Additive über den Umfang des Mischers verteilt vorsehen zu können, wobei das Anflanschen der entsprechenden Dosiereinheiten durch sehr gute Zugänglichkeit der seitlich am Mischer angeordneten Anschlußflansche begünstigt wird.

Im folgenden wird die Erfindung anhand einer lediglich einen Ausführungsweg darstellenden Zeichnung näher erläutert. Hierbei gehen aus den Figuren und ihrer Beschreibung weitere erfindungswesentliche Merkmale und Vorteile der Erfindung hervor.

Es zeigen:
- Figur 1:: eine schematische Darstellung der erfindungsgemäßen Vorrichtung;

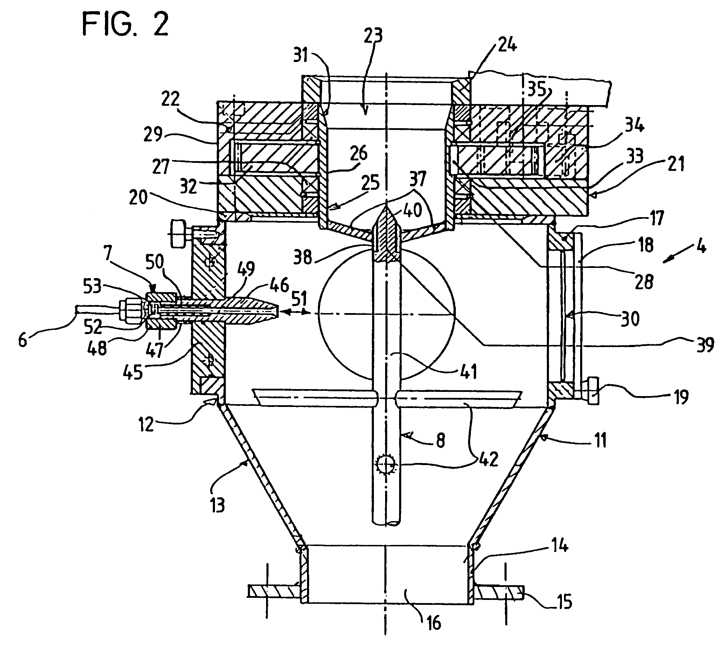

- Figur 2:: eine Längsschnittansicht durch eine erfindungsgemäße Mischeinrichtung.

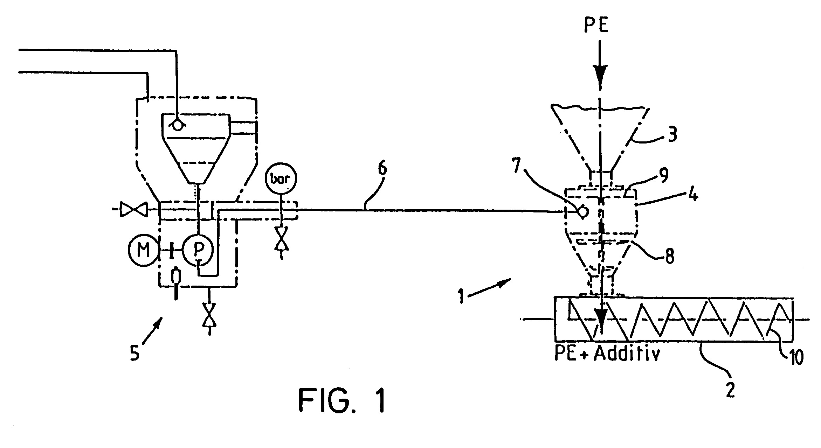

In Figur 1 ist schematisch der Aufbau der erfindungsgemäßen Extrudier-Vorrichtung 1 dargestellt, mit einem Schnecken-Extruder 2, einem oberhalb des Extruders 2 angeordneten Aufgabetrichter 3 für das Polymergranulat (PE), welcher Aufgabetrichter 3 in den zwischen dem Aufgabetrichter 3 und dem Extruder angeordneten Mischer 4 mündet. In diesem Mischer 4 mündet ferner eine von der Dosierpumpeneinheit 5 kommende Zuführleitung eines Additives (hier: Silanlösung) über eine Einspritzdüse 7 in das Innere des Mischers 4.

Im inneren des Behälters 4 ist ein Rührgestänge 8, welches über einen Antrieb 9, welcher später genauer beschrieben wird, antreibbar vorgesehen ist. Der Schnecken-Extruder 2 ist ein zum Kunststoff-Strangpreßen bekannter Extruder mit einem Schneckengesamt-Verhältnis Länge zu Durchmesser von etwa 26:1 und wird hier nicht näher beschrieben. Dem Schnecken-Extruder 2 wird das zu verarbeitende Kunststoff-Reaktionsgemisch unmittelbar aus dem über dem Schnecken-Extruder 2 angeordneten Mischer bereits optimal vorgemischt zugegeben.

Der Mischer 4 besteht im wesentlichen aus einem nach oben offenen Mischergehäuse 11, welches aus einem Oberteil 12 und einem Unterteil 13 aufgebaut ist. Hierbei ist das Unterteil 13 fest mit dem Oberteil 12 verschweißt und verläuft in der Form eines Vierkanttrichters nach unten hin verjüngt zu. An der Unterseite des Unterteils 13 ist ein Vierkantrohrstück 14 angebracht, welches gleichzeitig Teil des Flansches 15 ist. Der Flansch 15 ist am Umfang des Vierkantrohres 14 in einem derartigen Abstand von der Rohrunterkante angeordnet, daß ein kleines Stück des Vierkantrohres 14 über die ansonsten plane Unterseite des Flansches 15 vorsteht, welches als Zentrierung beim Anflanschen des Mischers 4 an den Schnecken-Extruder 2 dient.

Das Oberteil 12 des Mischergehäuses 11 ist ebenfalls als Vierkantrohr ausgebildet, wobei an allen seinen vier Seitenflächen jeweils eine Zuführöffnung 30 zusammen mit einem Anschlußflansch 17 ausgebildet sind, an denen entweder Zuführeinrichtungen 7 für etwaige Additive, welche dem Reaktionsgemisch beigemengt werden sollen, angeflanscht und mittels Schrauben 19 befestigt werden können. Werden weniger als vier Zuführöffnungen 30 benötigt, können diese mittels Aufschrauben eines Deckels 18 verschlossen werden.

Die nach oben offene Querschnittsfläche des Oberteils 12 trägt einen fest mit dem Oberteil 12 verbundenen Flanschring 20, auf dem ein Getriebe 21 aufliegt. Das Getriebe 21 ist Teil des Antriebes 9 für das Rührgestänge 8 und bildet gleichzeitig die obere Begrenzung des Mischergehäuses 11.

Das Getriebe 21 besteht aus einem im wesentlichen rechtwinkligen Getriebekasten 22, der eine vertikale Bohrung 23 aufweist, die als Zulauf für das PE-Granulat dient. Dieser Zulauf 23 ist auf der Oberseite des Getriebekastens 22 von einem Rohrstutzen 24 eingesäumt. Dieser Rohrstutzen 24 dient als Zentrierung für den an der Oberseite des Mischers 4 angeflanschten Aufgabetrichters 3. Die Zulauföffnung 23 dient gleichzeitig als Nabe für die Rührgestängenhalterung 25, die koaxial zu dem Zulauf 23 in diesem angeordnet und eingebaut ist.

Diese Halterung 25 umfaßt ein Rohr 26, weiches über Kugellager 27 und entsprechende Abdichtung 28 im Zulauf 23 des Getriebekastens 22 um die Rohrlängsachse drehbar gelagert ist. Das Rohr 26 bildet die Hohlwelle für das Stirnrad 32 des Rührgestängeantriebs 9. Dieses Stirnrad 32 ist durch Sprengringe 29 in seiner axialen Richtung und durch eine Paßfeder 33 in Umfangsrichtung festgelegt. In dem Stirnrad 32 kämmt ein Zahnrad 34, welches wiederum mit dem Ritzel 35 eines Elektromotors (nicht dargestellt) in Eingriff steht. Je nach Durchmesser und Zähneanzahl der jeweiligen Zahnräder kann damit eine gewünschte Übersetzung der Motordrehzahl festgelegt werden, um die Mischintensität des Rührgestänges 8 einzustellen.

Am oberen Ende des Rohres 26 ist am Innendurchmesser des Rohres 26 eine Phase 31 ausgebildet, die verhindern soll, daß durch den Zulauf 23 fließendes PE-Granulat gegen die Rohrstirnkante stößt und es zu Verstopfungen im Zulaufbereich kommen kann. An der dem Mischbehälterinnenraum zugewandten Stirnseite des Rohres 26 sind in radialer Richtung Stege 37 angebracht, welche eine koaxial zur Rohrmittelachse angeordnete Gewindemutter 38 halten. Die Gewindemutter 38 bildet die Befestigungsaufnahme für das Rührgestänge 8, das mit einem passenden Gewinde am oberen Ende des Vertikalstabes 41 mit der Mutter 38 verschraubbar ist. Die Schraubverbindung zwischen der Rührgestängehalterung 25 und dem Rührgestänge 8 bietet den Vorteil, daß je nach Reaktionsgemisch-Zusammensetzung und/oder Strömungsmengendurchsatz unterschiedlich geformte Rührgestänge eingeschraubt und verwendet werden können.

Im vorliegenden Ausführungsbeispiel besteht das Rührgestänge aus einem Vertikalstab 41, an dem in unterschiedlicher Höhe angeordnete radial nach außen stehende Horizontalstäbe 42 befestigt sind. Hierbei ist der oberste Horizontalstab unterhalb der Zuführöffnung 30 angeordnet, um die Verwirbelung im Bereich um die Mündung der Einspritzdüse 7 nicht zu behindern.

Die Einspritzdüse 7 ist mit Hilfe eines Blindstopfens 45 an dem Anschlußflansch 17 in die Zuführöffnung 30 ragend eingebaut. Dabei ist die Düse 46 in eine Bohrung des Blindstopfens 45 soweit eingesetzt, bis sie mit einem axialen Anschlag an der Düsenumfangsfläche gegen die eine Seite des Blindstopfens 45 anschlägt und von der rückwärtigen Seite her ist eine Hülse 47 auf die Düse 46 aufgeschoben und mit einer Befestigungsmutter 48 gegen den Blindstopfen 45 verspannt. In der Düse 46 ist eine axiale Durchgangsbohrung ausgebildet, in der sich ein Ventil 49 in der Pfeilrichtung 51 bewegen kann. Dieses Ventil 49 ist von einer Spiralfeder 50 umgeben, die durch den Federanschlag 52 den Ventilkörper 49 im Ruhestand im geschlossenen Zustand hält. Am hinteren Ende der Düse 46 und dem Inneren der Befestigungsmutter 48 ist ein Hohlraum 53 vorgesehen, in den die Zuführleitung 6 mündet.

Beim Zudosieren von Additiven in Mischer 4, baut das von der Dosiereinheit 5 kommende Additiv in dem Hohlraum 53 einen Druck auf, der, sofern er ausreichend groß ist, das Ventil 49 gegen die Vorspannung der Feder 50 in Richtung des Pfeiles 51 und öffnet dadurch die Düse. In diesem Betriebszustand kann das Additiv in den Innenraum des Mischers 4 eingespritzt werden. Wird der Druck in der Zuführleitung 6 verringert, so daß die Druckkraft gegen den Federanschlag 52 geringer ist als die Federkraft, so bewegt die Feder das Ventil 49 in umgekehrter Pfeilrichtung 51 und schließt damit die Düse wieder. Durch das druckabhängige Öffnen und Schließen der Einspritzdüse wird eine Verklumpung des Additiv um die Düsenmündung herum vermieden, und sichergestellt, daß nur Additive mit einem bestimmten Druck in das Mischerinnere eingespritzt werden, um so eine ausreichend gute Durchmischung erzielen zu können.

Mit dem erfindungsgemäßen Mischer 4 ist somit erstmals eine optimale Vormischung sämtlicher Reaktionsgemisch-Bestandteile vor der Zuführung zum Extruder möglich, wodurch eine homogenere Vernetzung der Polymere und damit eine Verbesserung des Endproduktes erzielt wird.

Die Vorrichtung eignet sich insbesondere, aber nicht ausschliesslich, zur Herstellung extrudierte Produkte aus Polymeren, welche durch Zugabe eines hydrolisierbaren, ungesättigten Silans, zumindest eines frei Radikalbildners, sowie zumindest eines Katalysators in einer Silanolkondensations-Reaktion in einem Extruder quervernetzt werden.

### ZEICHNUNGS-LEGENDE

- 1: Extrudiervorrichtung
- 2: Schnecken-Extruder
- 3: Aufgabetrichter (PE)
- 4: Mischer
- 5: Dosierpumpeneinheit
- 6: Zuführleitung
- 7: Einspritzdüse
- 8: Rührgestänge
- 9: Antrieb
- 10: Extruder-Schnecke
- 11: Mischergehäuse
- 12: Oberteil
- 13: Unterteil
- 14: Vierkantrohr
- 15: Flansch
- 16: Auslauf
- 17: Anschlußflansch
- 18: Deckel
- 19: Schraube
- 20: Flanschring
- 21: Getriebe
- 22: Getriebekasten
- 23: Zulauf (PE)
- 24: Rohrstutzen
- 25: Rührgestängehalterung
- 26: Rohr
- 27: Kugellager
- 28: Dichtung
- 29: Sprengring
- 30: Zuführöffnung
- 31: Phase
- 32: Stirnrad
- 33: Paßfeder
- 34: Zahnrad
- 35: Ritzel
- 37: Stege
- 38: Gewindemutter
- 39: Gewinde
- 40: Spitze
- 41: Vertikalstab
- 42: Horizontalstäbe
- 45: Blindstopfen
- 46: Düse
- 47: Hülse
- 48: Befestigungsmutter
- 49: Ventil
- 50: Feder
- 51: Pfeilrichtung
- 52: Federanschlag
- 53: Hohlraum

## Patentansprüche

1. Vorrichtung zur Herstellung extrudierter Produkte aus Polymeren, welche durch Zugabe zumindest eines Additivs in einer Polymerisationsreaktion quervernetzt werden, bestehend aus:
einer Stranggießvorrichtung (2),
einer Zuführeinrichtung (3) für das Kunststoffgranulat und
einer zwischen der Zuführeinrichtung (3) und der Stranggießvorrichtung (2) angeordneten Mischeinrichtung (4) mit einer Zuführeinrichtung (5,6,7) für mindestens ein Additiv, **dadurch gekennzeichnet**, daß die Mischeinrichtung (4) über ein durch ein Getriebe (21) angetriebenes Rührgestänge (8) verfügt, das im wesentlichen aus einem Vertikalstab (41) gebildet ist, daß das Getriebe (21) eine vertikal angeordnete Hohlwelle (26) für das Rührgestänge (8) aufweist, die eine zentrale, vertikale Bohrung umfaßt, welche den Zulauf (23) für das Kunststoffgranulat bildet, wobei der Vertikalstab (41) des Rührgestänges (8) koaxial zum Zulauf (23) angeordnet ist und über radiale Stege (37) mit der Hohlwelle (26) verbunden ist.

2. Vorrichtung nach Anspruch 1, **dadurch gekennzeichnet**, daß die Mischeinrichtung (4) einen Auslauf (16) für das Reaktionsgemisch umfaßt.

3. Vorrichtung nach Anspruch 2, **dadurch gekennzeichnet**, daß der Zulauf (23) für Kunststoffgranulat in vertikaler Richtung oben, der Auslauf (16) für das Reaktionsgemisch unten an der Mischeinrichtung (4) vorgesehen ist, dagegen die Zuführungen für Additive (5,6,7) seitlich ausgebildet sind.

4. Vorrichtung nach Anspruch 3, **dadurch gekennzeichnet**, daß die Additiv-Zuführung (7) im oberen Bereich der Mischeinrichtung (4), wo das Kunststoffgranulat in den Mischer eintritt, seitlich angeordnet ist.

5. Vorrichtung nach Anspruch 2, **dadurch gekennzeichnet**, daß die Rühreinrichtung (8) drehbar und antreibbar im Inneren der Mischeinrichtung (4) ausgebildet ist.

6. Vorrichtung nach Anspruch 5, **dadurch gekennzeichnet**, daß die Rühreinrichtung (8) aus einem koaxial zum Zulauf (23) angeordneten Vertikalstab (41) gebildet ist, an dem über den Umfangsbereich und im Abstand zueinander über die Länge verteilt in radialer Richtung Stäbe (42) angeordnet sind.

7. Vorrichtung nach Anspruch 6, **dadurch gekennzeichnet**, daß das Rührgestänge (8) über das Getriebe (21) um die vertikale Achse antreibbar ist.

8. Vorrichtung nach Anspruch 1, **dadurch gekennzeichnet**, daß die Zuführung (7) für Additive als Einspritzdüse ausgebildet ist.

9. Vorrichtung nach Anspruch 8, **dadurch gekennzeichnet**, daß die Einspritzdüse (7) ein Ventil (49) aufweist, welches die Einspritzdüse (7) in Abhängigkeit von dem an der Einspritzdüse (7) anliegenden Druck des Additives öffnet oder schließt.

10. Vorrichtung nach Anspruch 9, **dadurch gekennzeichnet**, daß die radialen Stege (37) über eine Schraubenverbindung (38) mit dem Vertikalstab (41) derart verbunden sind, daß verschiedene Rührgestänge (8) eingeschraubt werden können je nach Reaktionsgemisch-Zusammensetzung und/oder Strömungsmengendurchsatz.

## Claims

1. A device for the manufacture of extruded products from polymers which are cross-linked by the addition of at least one additive in a polymerisation reaction, consisting of:
a continuous casting device (2),
a supply device (3) for the plastic granulate and a mixing device (4) arranged between the supply device (3) and the continuous casting device (2) with a supply device (5,6,7) for at least one additive, characterised in that the mixing device (4) has a stirring rod system (8) driven by a gear unit (21), which rod system (8) is formed substantially of a vertical rod (41), that the gear unit (21) has a vertically arranged hollow shaft (26) for the stirring rod system (8), which comprises a central, vertical bore, which forms the inlet (23) for the plastic granulate, in which the vertical rod (41) of the stirring rod system (8) is arranged coaxially to the inlet (23) and is connected via radial cross-pieces (37) with the hollow shaft (26).

2. A device according to Claim 1, characterised in that the mixing device (4) comprises an outlet (16) for the reaction mixture.

3. A device according to Claim 2, characterised in that the inlet (23) for plastic granulate is provided in vertical direction at the top, the outlet (16) for the reaction mixture is provided at the bottom on the mixing device (4), whereas the supplies for additives (5,6,7) are constructed laterally.

4. A device according to Claim 3, characterised in that the additive supply (7) is laterally arranged in the upper region of the mixing device (4), where the plastic granulate enters into the mixer.

5. A device according to Claim 2, characterised in that the stirring device (8) is constructed so as to be rotatable and drivable in the interior of the mixing device (4).

6. A device according to Claim 5, characterised in that the stirring device (8) is formed from a vertical rod (41) arranged coaxially to the inlet (23), on which vertical rod (41) rods (42) are arranged distributed in radial direction over the circumferential region and at a distance from each other over the length.

7. A device according to Claim 6, characterised in that the stirring rod (8) is drivable via the gear unit (21) about the vertical axis.

8. A device according to Claim 1, characterised in that the supply (7) for additives is constructed as an injection nozzle.

9. A device according to Claim 8, characterised in that the injection nozzle (7) has a valve (49) which opens or closes the injection nozzle (7) as a function of the pressure of the additive lying against the injection nozzle (7).

10. A device according to Claim 9, characterised in that the radial cross-pieces (37) are connected with the vertical rod (41) via a screw connection (38) such that various stirring rods (8) can be screwed in according to the reaction mixture composition and/or throughput of the quantity of flow.

## Revendications

1. Dispositif pour la fabrication de produits extrudés en polymère qui sont réticulés lors d'une réaction de polymérisation grâce à l'adjonction d'un additif, comprenant :
- un dispositif de coulée continue (2),
- un dispositif d'amenée (3) pour le granulat de matière plastique, et
- un dispositif mélangeur (4) disposé entre le dispositif d'amenée (3) et le dispositif de coulée continue (2) et pourvu d'un dispositif d'amenée (5, 6, 7) pour au moins un additif,
**caractérisé** en ce que le dispositif mélangeur (4) dispose d'un mécanisme agitateur (8) qui est entraîné par un engrenage (21) et qui est formé essentiellement par une barre verticale (41), et en ce que l'engrenage (21) comporte pour le mécanisme agitateur (8) un arbre creux (26) qui est disposé à la verticale et qui contient un perçage vertical central définissant l'arrivée (23) pour le granulat de matière plastique, étant précisé que la barre verticale (41) du mécanisme agitateur (8) est disposée coaxialement par rapport à l'arrivée (23) et est reliée à l'arbre creux (26) par des pattes radiales (37).

2. Dispositif selon la revendication 1, **caractérisé** en ce que le dispositif mélangeur (4) comprend une sortie (16) pour le mélange de réaction.

3. Dispositif selon la revendication 2, **caractérisé** en ce que l'arrivée (23) pour le granulat de matière plastique est prévue dans le sens vertical en haut, et la sortie (16) prévue pour le mélange de réaction est prévue en bas du dispositif mélangeur (4), tandis que les amenées pour les additifs (5, 6, 7) sont formées sur le côté.

4. Dispositif selon la revendication 3, **caractérisé** en ce que l'amenée d'additif (7) est disposée sur le côté de la zone supérieure du dispositif mélangeur (4), où le granulat de matière plastique entre dans le mélangeur.

5. Dispositif selon la revendication 2, **caractérisé** en ce que le dispositif agitateur (8) est conçu pour pouvoir tourner et être entraîné, à l'intérieur du dispositif mélangeur (4).

6. Dispositif selon la revendication 5, **caractérisé** en ce que le dispositif agitateur (8) se compose d'une barre verticale (41) qui est disposée coaxialement par rapport à l'arrivée (23) et sur la zone périphérique et sur la longueur de laquelle sont réparties des barres radiales (42) espacées les unes des autres.

7. Dispositif selon la revendication 6, **caractérisé** en ce que le mécanisme agitateur (8) est apte à être entraîné autour de l'axe vertical grâce à l'engrenage (21).

8. Dispositif selon la revendication 1, **caractérisé** en ce que l'amenée (7) pour les additifs est conçue comme un injecteur.

9. Dispositif selon la revendication 8, **caractérisé** en ce que l'injecteur (7) comporte une soupape (49) qui l'ouvre ou le ferme en fonction de la pression de l'additif qui est appliquée au niveau de l'injecteur (7).

10. Dispositif selon la revendication 9, **caractérisé** en ce que les pattes radiales (37) sont reliées à la barre verticale (41) grâce à une liaison par vissage (38) de manière à permettre de visser différents mécanismes agitateurs (8) suivant la composition du mélange de réaction et/ou le débit.
